# DEMANDE DE BREVET EUROPEEN

(11) **EP 1 155 976 A1**
(43) Date de publication de la demande: **21.11.2001**
(21) Numéro de dépôt: 01401255.3
(22) Date de dépôt: 15.05.2001
(51) Int. Cl.: B65D 90/10, G02B 7/00, B60P 3/22

(54) **Dispositif d'inspection de l'interieur d'une cuve de citerne**

(30) Priorité: 16.05.2000 FR 0006229
(71) Demandeur: General Trailers France, 91130 Ris Orangis (FR)
(72) Inventeur: Lesieur, Claude, 91042 Evry cedex (FR)
(74) Mandataire: Michelet, Alain

(57) **Abrégé**

L'invention a pour objet un dispositif d'inspection (1) de l'intérieur d'une cuve opaque (2) de citerne. Ce dispositif comprend une fenêtre fixe (3), étanche et transparente, agencée à une partie supérieure de la cuve (2) et dont les dimensions et le positionnement sont tels à offrir un champ de vison (V1, V2) dans la cuve (2), apte à permettre une observation visuelle et directe, à l'exclusion de tout autre mode de détection, notamment de sa partie basse (4) qui comporte au moins un obturateur interne (5) constituant un point de vidange pour l'écoulement du produit contenu dans la cuve (2) vers l'extérieur, et une source de lumière indépendante (6) apte à éclairer l'intérieur de la cuve (2) au travers d'une zone d'ouverture étanche pratiquée sur la cuve (2).

## Description

La présente invention concerne un dispositif d'inspection de l'intérieur d'une cuve opaque de citerne.

Dans les cuves de citerne, il est périodiquement nécessaire de procéder à certaines inspections comme le contrôle de la vacuité, de l'état général des parois, de l'absence de corps étrangers, en fait de l'intérieur de la cuve de la citerne en général.

Plus particulièrement, il est souvent nécessaire d'inspecter la partie basse de la cuve qui comporte un ou plusieurs obturateurs internes constituant autant de points de vidange pour l'écoulement du produit contenu dans la cuve vers l'extérieur. C'est dans ces endroits précisément que parfois se logent des corps étrangers.

Pour réaliser cette inspection, il est habituel qu'un opérateur se hisse au sommet de la citerne pour inspecter visuellement l'intérieur de la cuve après avoir ouvert une trappe ou un orifice quelconque de visite et en s'aidant généralement d'une source de lumière apte à éclairer l'intérieur de la cuve.

On comprend aisément qu'une telle façon de procéder n'est pas sans danger lorsque la cuve est utilisée pour des produits volatils et inflammables tels que des hydrocarbures, car l'ouverture de la trappe provoque des pertes de vapeur dans l'atmosphère et la source lumineuse peut générer le risque de provoquer une étincelle.

La présente invention a pour but de remédier à ces inconvénients et concerne à cet effet un dispositif d'inspection de l'intérieur d'une cuve opaque de citerne, qui est constitué d'une fenêtre fixe, étanche et transparente, agencée à une partie supérieure de la cuve et dont les dimensions et le positionnement sont tels à offrir un champ de vision dans la cuve, apte à permettre une observation visuelle et directe à l'exclusion de tout autre mode de détection et d'une source de lumière indépendante apte à éclairer l'intérieur de la cuve au travers d'une zone d'ouverture étanche pratiquée sur la cuve.

L'invention peut s'appliquer à tout type de citerne quel que soit le produit transporté, pourvu que ce dernier soit décelable visuellement. Elle s'applique avantageusement à la partie basse de la cuve comportant un ou plusieurs obturateurs internes constituant autant de points de vidange pour l'écoulement du produit contenu dans la cuve vers l'extérieur.

D'une façon générale, l'intérêt de l'invention réside dans le fait que l'inspection est réalisée directement, c'est-à-dire sans ouverture d'une trappe ou d'un orifice quelconque de visite et de façon purement mécanique, en particulier sans système électronique, tel que sonde ou autre, ce qui permet de garantir une bonne fiabilité et un coût peu élevé de réalisation.

Un autre avantage de l'invention réside dans le fait que l'inspection peut être réalisée quelle que soit la luminosité extérieure, comme par exemple de nuit lors de la livraison à une station de service.

Elle pourra être réalisée également quelle que soit la pente du sol sur lequel se trouve la cuve, qui pourra être en particulier en contre-pente.

D'une manière générale, l'inspection pourra être effectuée avec un nombre minimum d'équipement pour l'éclairage de l'intérieur de la cuve, ou des cuves, de la citerne.

De manière particulière, l'invention est appliquée aux citernes destinées au transport d'hydrocarbures, produits en général hautement volatils et inflammables. L'intérêt de l'invention réside donc également dans le fait que l'inspection pourra être réalisée sans perte de vapeurs nocives et inflammables dans l'atmosphère puisque le dispositif peut être réalisé de façon à assurer une étanchéité parfaite et aussi en toute sécurité, puisque sans risque de générer d'étincelle.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera comprendre comment l'invention peut être réalisée, en référence aux dessins annexés sur lesquels:
- la figure 1 est une vue en coupe transversale d'une cuve comportant un dispositif d'inspection selon un premier mode de réalisation ;
- la figure 2 est une vue en coupe transversale d'une cuve comportant un dispositif d'inspection selon un deuxième mode de réalisation ;
- la figure 3 est une vue en coupe transversale d'une cuve comportant un dispositif d'inspection selon un troisième mode de réalisation ;
- la figure 4 représente une vue en coupe transversale d'une cuve d'un autre type comportant un dispositif d'inspection selon la figure 2.

Le dispositif d'inspection, globalement désigné en 1, est destiné à l'inspection de l'intérieur d'une cuve 2 opaque d'une citerne.

Selon l'invention, le dispositif 1 comporte une fenêtre fixe 3 étanche et transparente agencée à une partie supérieure de la cuve 2 et dont les dimensions et le positionnement sont tels à offrir des champs de vision V1 et V2 dans la cuve 2, apte à permettre une observation visuelle et directe à l'exclusion de tout autre mode de détection, notamment de la partie basse 4 de la cuve comportant un ou plusieurs obturateurs internes 5, constituant autant de points de vidange pour l'écoulement du produit contenu dans la cuve 2 vers l'extérieur.

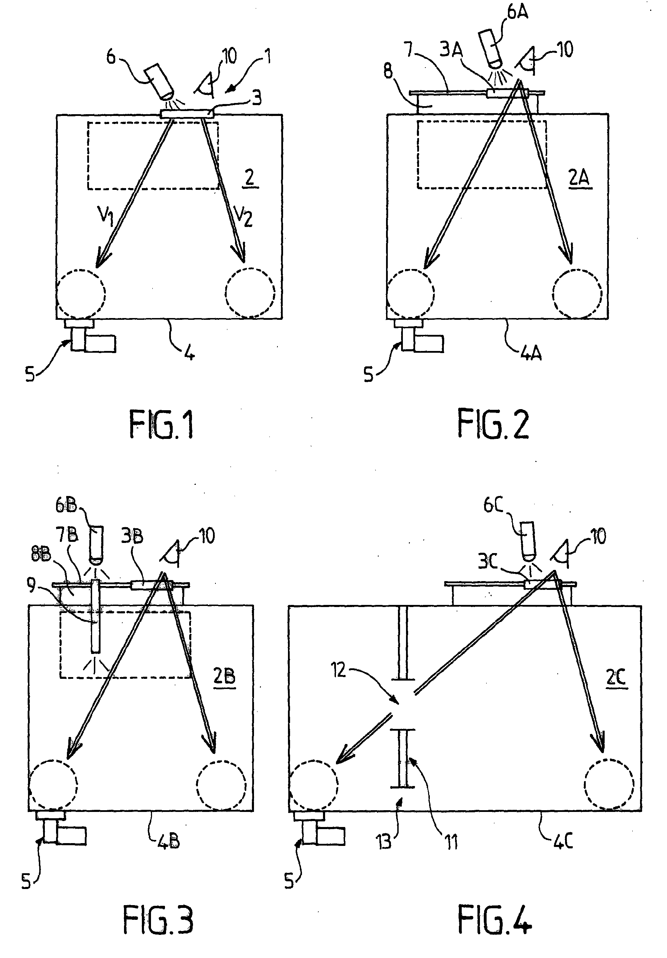

Comme le montre la Figure 1, le dispositif d'inspection 1 comporte également une source de lumière 6 indépendante, apte à éclairer l'intérieur de la cuve 2 au travers d'une zone d'ouverture étanche pratiquée sur la cuve 2.

Selon le présent exemple de réalisation, la source lumineuse 6 est constituée d'un élément mobile tel que torche ou baladeuse, apte à éclairer l'intérieur de la cuve 2 au travers de la fenêtre de visualisation transparente elle-même 3 qui est réalisée directement sur la cuve 2.

Bien entendu, la source lumineuse pourrait être également constituée par un élément mobile apte à éclairer l'intérieur de la cuve 2 au travers d'une seconde fenêtre étanche distincte de la fenêtre de visualisation 3 proprement dite et réservée uniquement à l'éclairement de la cuve 2.

Toujours selon le présent exemple de réalisation, la fenêtre étanche et transparente 3 est fixée directement sur la cuve 2 à sa partie supérieure en un endroit prédéterminé.

La fenêtre étanche 3 est d'une forme géométrique quelconque. Elle est dimensionnée en fonction des besoins de l'application et de l'espace disponible dans son environnement.

D'une manière générale, elle sera réalisée dans un matériau compatible avec le produit stocké dans la cuve et avec son environnement extérieur. Elle pourra avoir reçu tous les traitements chimiques ou autres et être équipée de tous les accessoires propres à améliorer son utilisation en terme de fiabilité, de durée de vie, de coût, de propriété optique, etc...

Le mode de réalisation représenté à la figure 2 diffère du précédent essentiellement en ce que la fenêtre étanche et transparente 3A est fixée sur le plateau supérieur 7 d'un dôme 8, lui-même réalisé sur le sommet de la cuve 2 en un endroit prédéterminé.

Quel que soit le cas de figure, la fenêtre étanche et transparente 3, ou 3A, est avantageusement de forme oblongue de manière à permettre de positionner une torche ou baladeuse 6 ou 6A d'un côté de ladite fenêtre et regarder de l'autre côté.

D'une manière générale, la fenêtre 3 ou 3A est positionnée judicieusement sur la cuve 2 ou sur le dôme 8, de manière à pouvoir visualiser les zones suivantes:
- la partie basse 4 de la cuve 2 à proximité des obturateurs internes 5 ou du côté opposé aux obturateurs internes pour le cas où la cuve serait en contre-pente,
- la zone à l'aplomb du plateau 7 du dôme 8 pour visualiser tout corps étranger fixé à ce dernier et destiné soit à retenir du produit dans la cuve, un seau par exemple, soit à modifier artificiellement la hauteur de liquide, chambre à air par exemple...

Il est à noter également que la source lumineuse 6 peut être constituée par un élément fixe (non représenté) disposé de manière étanche sur toute partie de la cuve ou du dôme à proximité de sa fenêtre de visualisation.

Selon l'exemple de réalisation de la figure 3, la source lumineuse 6B est constituée d'un élément mobile tel que torche ou baladeuse apte à éclairer l'intérieur de la cuve 2 au travers d'un piquage intérieur 9 constituant un logement borgne traversant de manière étanche la paroi supérieur de la cuve 2 ou du dôme 8B, qui lui est rapporté selon le présent cas de figure, lequel piquage 9 est réalisé à proximité de la fenêtre de visualisation 3B.

Quel que soit le cas de figure, la source lumineuse 6, 6A, 6B est de puissance et d'autonomie prédéterminées en fonction de la taille de la cuve 2 et de la position et des dimensions de la fenêtre 3, 3A, 3B pour éclairer suffisamment l'intérieur de la cuve 2 au moment de l'inspection, et cela quelle que soit la lumière extérieure ambiante.

Le type d'alimentation (pile, accus, ... ) sera choisi adéquatement en fonction de l'utilisation et pourra faire l'objet d'un niveau de protection propre à pouvoir l'utiliser en zone dangereuse.

Le choix de la source lumineuse et son mode de fonctionnement sont très importants car, pour le bon fonctionnement du dispositif, dans toutes les conditions, le choix de la source lumineuse doit se faire en fonction de la fenêtre de visualisation. Par exemple, pour une fenêtre ovale de dimensions 70 mm x 100 mm et une distance fenêtre 3/fond 4 de cuve 2, de 4 m environ, il est préconisé une source lumineuse 6 correspondant à une puissance d'éclairage de 6000 candela. Très avantageusement, la source lumineuse est une lampe-flash produisant des flash, ou éclairs, dont l'intensité lumineuse (la puissance d'éclairage) est supérieure à 6000 candela et dont la durée et la cadence sont choisies de façon à éviter un éblouissement de la personne inspectant la cuve.

En ce qui concerne la fenêtre de visualisation 3B, celle-ci devra être:
- suffisamment grande pour avoir une visibilité suffisante et devra être plus grande que la partie optique de la source lumineuse, dans le cas d'une seule fenêtre afin d'avoir un minimum de déperdition de lumière et ne pas être gêné par les reflets de la source lumineuse sur la fenêtre, afin d'effectuer une inspection des extrémités;
- suffisamment petite pour être peu encombrante et pouvoir par exemple être intégrée à des accessoires existant sur la cuve, comme le plateau de dôme par exemple, et réduire ainsi les coûts de fabrication en ne générant pas le montage d'un équipement supplémentaire sur la cuve.

Comme déjà évoqué, la fenêtre étanche et transparente 3, 3A ou 3B est réalisée dans un matériau compatible avec le produit stocké, mais il pourra être également sombre afin de réduire les perturbations dus aux reflets de la lumière extérieure. Il sera résistant aux conditions ambiantes extérieures telles que différence de température ou ultraviolets dans le cas d'un usage à l'air libre. Il pourra admettre dans le temps une coloration due au contact avec le produit ou ses valeurs, mais restera impérativement translucide.

Bien que non représentés, un certain nombre d'accessoires pourront être adaptés au dispositif décrit ci-dessus. Ainsi, par exemple, un capot escamotable pourra être disposé sur la fenêtre de visualisation, de manière à assurer sa protection contre les chocs mécaniques.

D'autres accessoires pourront également être envisagés comme par exemple la mise en place d'un essuie-glace intégré pour supprimer la condensation qui pourrait réduire la visibilité.

Egalement, on peut prévoir un index interne réglé et plombé indiquant la hauteur que doit atteindre le liquide pour un certain volume.

Le dispositif d'inspection selon la figure 4 correspond essentiellement à celui de la figure 2 et on se reportera à la partie de description correspondante ci-dessus.

Seule diffère son application car en l'occurrence, s'agissant d'une cuve mobile 2C, des brise-flots 11, constituant des cloisons non étanches, peuvent être placés dans la cuve 2C afin de réduire les effets de balourd du liquide. Ces brise-flots 11 comportent généralement en leur centre une ouverture 12 et à leur partie d'extrémité inférieure, une ouverture 13 pour permettre l'écoulement du produit. Selon ce cas de figure, le positionnement de la fenêtre 3C permettra de voir la partie basse 4 à travers le perçage central 12.

Quel que soit le cas de figure, la visualisation sera effectuée par un oeil humain 10 ou par tout autre moyen tel que, par exemple, une caméra. L'utilisation d'une caméra ou d'un appareil-photo relié à une lampe-flash constituant la source lumineuse 6, permet une documentation de l'état de l'intérieur de la cuve au fil des inspections périodiques.

## Revendications

1. Dispositif d'inspection (1) de l'intérieur d'une cuve opaque (2) de citerne constitué:
• d'une fenêtre fixe (3, 3A, 3B, 3C), étanche et transparente, agencée à une partie supérieure de la cuve (2) et dont les dimensions et le positionnement sont tels à offrir un champ de vison (V1, V2) dans la cuve (2, 2A, 2B, 2C), apte à permettre une observation visuelle et directe, à l'exclusion de tout autre mode de détection, et
• d'une source de lumière indépendante (6, 6A, 6B, 6C) apte à éclairer l'intérieur de la cuve (2, 2A, 2B, 2C) au travers d'une zone d'ouverture étanche pratiquée sur la cuve (2, 2A, 2B, 2C),
**caractérisé en ce que** la fenêtre étanche et transparente (3, 3A, 3B, 3C) est de forme oblongue.

2. Dispositif selon la revendication 1, **caractérisé en ce que** la fenêtre étanche et transparente (3) est fixée directement sur la cuve (2) à sa partie supérieure, en un endroit prédéterminé.

3. Dispositif selon la revendication 1, **caractérisé en ce que** la fenêtre étanche et transparente (3A) est fixée sur le plateau supérieur (7) d'un dôme (8), lui-même réalisé sur le sommet de la cuve (2A) en un endroit prédéterminé.

4. Dispositif selon l'une des revendications 1 à 3, **caractérisé en ce que** la fenêtre étanche et transparente (3, 3A, 3B, 3C) est réalisée dans un matériau compatible avec le produit stocké dans la cuve (2, 2A, 2B, 2C) et avec son environnement extérieur.

5. Dispositif selon l'une des revendications 1 à 4, **caractérisé en ce qu'**un capot escamotable est disposé sur la fenêtre étanche et transparente de manière à assurer sa protection contre les chocs mécaniques.

6. Dispositif selon l'une des revendications 1 à 5, **caractérisé en ce que** la source lumineuse (6, 6A, 6B, 6C) est de puissance et d'autonomie prédéterminées en fonction de la taille de la cuve (2, 2A, 2B, 2C) et de la position et des dimensions de la fenêtre (3, 3A, 3B, 3C) pour éclairer suffisamment l'intérieur de la cuve (2, 2A, 2B, 2C) au moment de l'inspection, et cela quelle que soit la lumière extérieure ambiante.

7. Dispositif selon la revendication 6, **caractérisé en ce que** la source lumineuse (6, 6A, 6B, 6C) est constituée d'un élément mobile tel que torche ou baladeuse, apte à éclairer l'intérieur de la cuve (2, 2A, 2B, 2C) au travers de la fenêtre de visualisation transparente elle-même (3, 3A, 3B, 3C) réalisée directement sur la cuve (2) ou sur un dôme (8) d'une cuve (2A, 2B, 2C).

8. Dispositif selon la revendication 6, **caractérisé en ce que** la source lumineuse (6, 6A, 6B, 6C) est constituée d'un élément mobile tel que torche ou baladeuse apte à éclairer l'intérieur de la cuve (2, 2A, 2B, 2C) au travers d'une seconde fenêtre étanche distincte de celle de visualisation proprement dite (3, 3A, 3B, 3C), et réservée uniquement à l'éclairement de la cuve (2, 2A, 2B, 2C).

9. Dispositif selon la revendication 6, **caractérisé en ce que** la source lumineuse (6, 6A, 6B, 6C) est constituée d'un élément mobile tel que torche ou baladeuse apte à éclairer l'intérieur de la cuve (2, 2A, 2B, 2C) au travers d'un piquage fixe (9) constituant un logement borgne traversant de manière étanche la paroi supérieure de la cuve (2, 2A, 2B, 2C) ou du dôme (8, 8B ou 8C) qui lui est rapporté, lequel piquage (9) est réalisé à proximité de la fenêtre de visualisation (3, 3A, 3B, 3C).

10. Dispositif selon la revendication 6, **caractérisé en ce que** la source lumineuse (6) est constituée par un élément fixe non représenté disposé de manière étanche sur toute partie de la cuve (2, 2A, 2B, 2C) ou du dôme (8, 8B, 8C) à proximité de sa fenêtre de visualisation.

11. Dispositif selon la revendication 6, **caractérisé en ce que** la source lumineuse est une lampe-flash.
